(19) Europäisches Patentamt
European Patent Office
Office européen des brevets

(11) **EP 1 391 983 B1**

(12) **EUROPEAN PATENT SPECIFICATION**

(45) Date of publication and mention
of the grant of the patent:
**03.11.2010 Bulletin 2010/44**

(51) Int Cl.:
*H02P 3/06* (2006.01)   *D03D 47/34* (2006.01)

(21) Application number: **03013523.0**

(22) Date of filing: **13.06.2003**

(54) **Method for detecting the stall of the motor of the pre-feeder of weft pre-measurer in weaving looms**

Verfahren zur Feststellung der Motorblockierung des Vorförderers des Schussfaden-Vordosierers in Webmaschinen

Méthode pour détecter le décalage d'un moteur de préalimentation du prédoseur d'une trame d'un métier à tisser

(84) Designated Contracting States:
**BE CH DE LI SE**

(30) Priority: **21.08.2002 IT TO20020735**

(43) Date of publication of application:
**25.02.2004 Bulletin 2004/09**

(73) Proprietor: **L.G.L. Electronics S.p.A.**
**24024 Gandino (Bergamo) (IT)**

(72) Inventor: **Gotti, Luca**
**24021 Albino (BG) (IT)**

(74) Representative: **Spandonari, Carlo et al**
**Spandonari & Modiano s.r.l.**
**Corso Duca degli Abruzzi 16**
**10129 Torino (IT)**

(56) References cited:
**EP-A- 1 048 768     US-A- 4 623 826**
**US-A- 5 367 236**

## Description

The present invention relates to a method for detecting the stall of the motor of the pre-feeder or weft pre-measurer in a loom, or any other similar weaving machine.

As well known to the person skilled in the art, the main object of the pre-feeder is to maintain a weft reserve consisting of a plurality of yarn loops on a cylinder available for the picking device of the loom. The speed of the motor of the pre-feeder is controlled by a micro-controller in order to continuously restore the reserve while the weft is drawn. In order to avoid that jams of the yarn fed to the pre-feeder, by causing the motor to be slowed down or stopped, may break off the restoration of the reserve, thereby causing the latter to be emptied, the micro-controller is programmed to monitor the speed of the motor and to stop the loom in case the motor is stopped or slowed down under a predetermined threshold. Usually, the micro-controller matches the time intervals between successive pulses of a signal from a motor speed indicator with an allowable maximum time, and generates a stop signal for the loom when such maximum time is exceeded. Such an approach is described in US-4,623,826.

The drawback of said known method is that, if a short maximum time is chosen, false stops of the loom may occur, particularly for low operational speed of the feeder, while, on the other side, if a longer maximum time is chosen for caution, the weft reserve may by excessively emptied, particularly in the case of a high operational rate.

Accordingly, a main object of the present invention is to provide a method for detecting the stall of the motor of the pre-feeder or weft pre-measurer, which avoids said drawbacks by enabling detection of the stall with reasonable accuracy over a large range of operational speed of the feeder.

The invention achieves said object and other aims and advantages, which will better appear from the following description, by a method for detecting the stall of the motor of the pre-feeder or weft pre-measurer in weaving looms having the features recited in claim 1.

The dependent claims state other advantageous features of the invention.

The invention will be further described below with reference to the attached drawing, wherein:

Fig. 1 is a simplified diagram of a weft pre-feeder with a conventional control system;

Fig. 2 is a time diagram showing the operation of the control of Fig. 1; and

Fig. 3 is a time diagram showing the method according to the invention.

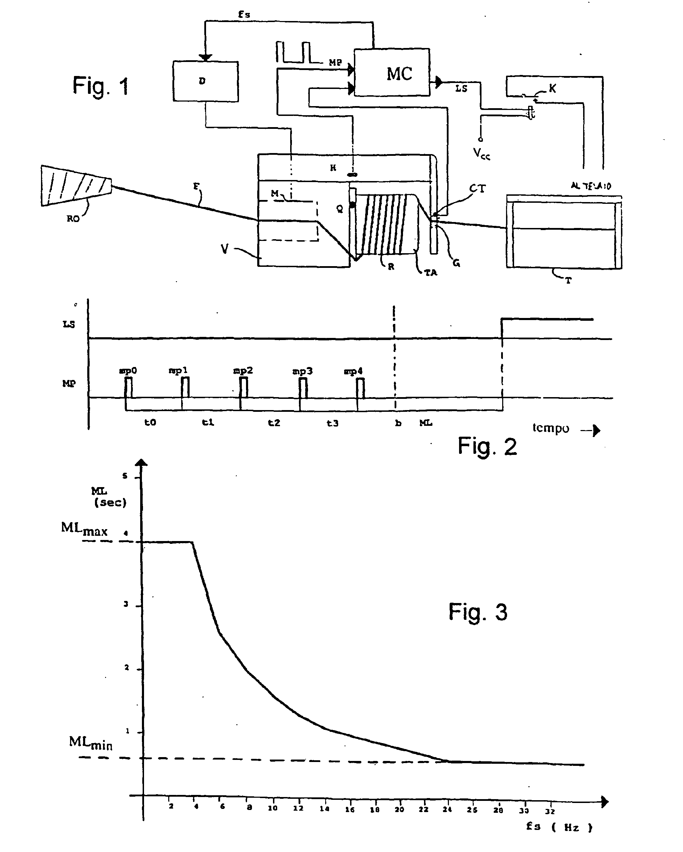

In Fig. 1, an electric motor M of a feeder/weft pre-measurer unwinds a weft yarn F from a reel RO and, by means of a rotor V, winds it on a stationary loom TA in a plurality of loops forming a weft reserve R. The yarn is fed from the weft reserve to a loom T in successive spans, at each weft insertion, through a yarn-guide eyelet G near which is preferably mounted a weft consumption meter CT e.g. using a piezoelectric sensor, such as described in EP 0 401 699.

As known per se, at each revolution of motor M a sensor H detects the passage of a magnet Q supported by rotor V and sends the generated signal to a micro-controller MC, in form of a train of electric pulses MP. Micro-controller MC processes the received signals and generates a synchronization-frequency output signal *fs* driving a driver block D of motor M, which restores the weft reserve while the reserve is being emptied by the insertion device of the loom.

In said known device, yarn F from reel RO may accidentally get entangled upstream of the feeder, or it may be unable to freely unwind from the reel because of a defective winding on it. In these cases, the torque generated by motor M is unable to overcome the resisting torque that retains the yarn, so that the motor stops and rotor V is prevented from further winding the yarn on stationary cylinder TA. Accordingly, the higher the consumption of the yarn, the faster will be the emptying of stationary cylinder TA of the feeder, thereby eventually causing a sizable rise of the yarn tension and then of the defects of quality of the fabric under processing.

In order to overcome such drawback, which is intolerable particularly when high quality fabrics are treated, and in order to minimize the damages, the micro-controller is programmed to detect the stopped condition of motor M and, in this case, to stop loom T before the weft reserve being excessively emptied. In a typical solution nowadays employed, a relay K, which is normally on, is operated by micro-controller MC through a stop signal LS, normally disabled, for shutting down the power supply to loom T when the micro-controller, after detecting the stall of the motor in relation to the excessive time employed by rotor V for winding the weft on the loom, enables signal LS.

With reference to Fig. 2, diagram MP shows the train of pulses *mp0, mp1, ...*, which are sent to the micro-controller by sensor H, and diagram LS shows the stop signal. Micro-controller MC compares the time intervals between two successive pulses MP with an allowable maximum time ML. While these intervals *t0, t1, t2, ...*, are less than ML, stop signal LS are disabled; when, at instant *b*, the time after pulse *mp4* exceeds time ML without a subsequent pulse having appeared, micro-controller MC enables signal LS.

According to this invention, the above-described method is improved by programming the micro-controller MC to continuously adjust the allowable maximum time ML according to a law that is inversely proportional to the synchronization frequency *fs*. Consequently ML will be longer with low synchronization frequencies, and shorter with high synchronization frequencies, thereby compensating the speed variations and avoiding the above mentioned drawbacks. It is easy for micro-controller MC to compute allowable maximum time ML, by means of the relation:

$$ML = \frac{B}{fs}$$

where B is a design constant, and where in practice the relationship $Ml_{max} \leq ML \leq Ml_{min}$ should also be enforced. The relation is diagrammed in Fig. 3, wherein ML is on the ordinate axis and *fs* on the abscissa axis.

Programming the micro-controller for executing the method depends on the implementation, however it will be obvious for the person skilled in the art on the basis of the above-stated law.

Alternatively, ML may depend, rather than on *fs*, on a quantity which is substantially proportional to *fs*, such as the average weft-consumption rate, Vmc, according to the relation:

$$ML = \frac{C}{Vmc}$$

where C is a constant, and where, for the sake of simplicity, the relationship $Ml_{max} \leq ML \leq Ml_{min}$ should also be enforced. The diagram will be similar, also in this case, to the diagram of Fig. 3.

The quantity Vmc may be drawn from the output of the weft-consumption pre-measurer CT, which generates a pulse at each loop unwinding from the cylinder, or, alternatively, may be drawn from a weft-loop counter, e.g. an optical device such as described in the Italian Patent No. 1.307.713 of the Applicant filed on 7 May 1999. It can be seen that, also by means of the last relation, the same advantages of the first relation are achieved, because both *fs* and Vmc depend on the average rate of the yarn running from the reel to the loom.

It is understood that the method can be executed by different operative modes, depending on the specific equipment. In particular, the devices for detecting the quantities such as the motor speed or the weft consumption may be changed.

## Claims

1. A method for detecting the stall of the motor (M) of a weft pre-feeder or weft pre-measurer in weaving looms, in which a micro-controller (MC) receives pulse signals (*mpo*, *mp1*, ...) which are proportional to the revolving speed of the motor, and generates a stop signal (LS) for disabling the loom when the time interval between two successive pulses in said pulse signals exceeds a predetermined maximum time (ML), **characterized in that** said predetermined maximum time (ML) is calculated continuously by the micro-controller during operation of the motor by a relation of inverse proportionality to the operating speed of the motor, within a predetermined range of values of the maximum time (ML).

2. The method of claim 1, **characterized in that** said relation of inverse proportionality is:

$$ML = B \,/\, fs$$

where ML is said maximum time, B is a predetermined constant, *fs* is the synchronization frequency set for the motor (M) by the micro-controller (MC), and where

$$Ml_{max} \leq ML \leq Ml_{min},$$

where $Ml_{max}$ and $Ml_{min}$ are, respectively, a predetermined maximum limit value and a predetermined minimum limit value of said maximum time (ML).

3. The method of claim 1, **characterized in that** said relation of inverse proportionality is:

$$ML = C \,/\, Vmc$$

where ML is said maximum time, C is a predetermined constant, Vmc is the weft-consumption rate, and where

$$Ml_{max} \leq ML \leq Ml_{min},$$

where $Ml_{max}$ and $Ml_{min}$ are, respectively, a predetermined maximum limit value and a predetermined minimum limit value of said maximum time (ML).

## Patentansprüche

1. Verfahren zum Detektieren des Abschaltens des Motors (M) eines Schussfaden-Vorzuführers oder eines Schussfaden-Vorablängers in Webstühlen, bei welchem ein Mikrocontroller (MC) Pulssignale (mp0, mp1, ...) empfängt, welche proportional zu der Drehgeschwindigkeit des Motors sind, und ein Stopsignal (LS) zum Abstellen des Webstuhls erzeugt, wenn das Zeitintervall zwischen zwei aufeinanderfolgenden Pulsen in den Pulssignalen eine vorbestimmte maximale Zeit (ML) überschreitet, **dadurch**

**gekennzeichnet, dass** die vorbestimmte maximale Zeit (ML) mittels des Mikrocontrollers während eines Betriebs des Motors kontinuierlich berechnet wird, und zwar mittels eines Verhältnisses einer inversen Proportionalität zu der Betriebsgeschwindigkeit des Motors, und zwar innerhalb eines vorbestimmten Bereichs von Werten der maximalen Zeit (ML).

2. Verfahren nach Anspruch 1, **dadurch gekennzeichnet, dass** das Verhältnis einer inversen Proportionalität lautet:

$$ML = B \: / \: fs$$

wobei ML die maximale Zeit ist, B eine vorbestimmte Konstante ist, fs die Synchronisationsfrequenz ist, die mittels des Mikrocontrollers (MC) für den Motor (M) eingestellt ist, und wobei

$$MI_{max} \leq ML \leq MI_{min},$$

wobei $MI_{max}$ und $MI_{min}$ ein vorbestimmter maximaler Grenzwert bzw. ein vorbestimmter minimaler Grenzwert der maximalen Zeit (ML) sind.

3. Verfahren nach Anspruch 1, **dadurch gekennzeichnet, dass** das Verhältnis einer inversen Proportionalität lautet:

$$ML = C \: / \: Vmc,$$

wobei ML die maximale Zeit ist, C eine vorbestimmte Konstante ist, Vmc die Schussfaden-Verbrauchsmenge ist, und wobei

$$MI_{max} \leq ML \leq MI_{min},$$

wobei $MI_{max}$ und $MI_{min}$ ein vorbestimmter maximaler Grenzwert bzw. ein vorbestimmter minimaler Grenzwert der maximalen Zeit (ML) sind.

**Revendications**

1. Procédé de détection du calage du moteur (M) d'un pré-fournisseur ou d'un dispositif de pré-mesure du fil de trame dans un métier à tisser, dans lequel un microcontrôleur (MC) reçoit des signaux à impulsions (mp0, mp1,...) qui sont proportionnels à la vitesse de rotation du moteur, et génère un signal d'arrêt (LS) pour désactiver le métier à tisser quand l'intervalle de temps séparant deux impulsions successives dans lesdits signaux à impulsions dépasse une durée maximale prédéterminée (ML), **caractérisé en ce que** ladite durée maximale prédéterminée (ML) est calculée de manière continue par le microcontrôleur quand le moteur tourne, selon un rapport de proportionnalité inverse à la vitesse de rotation du moteur, dans une plage prédéterminée de valeurs de la durée maximale (ML).

2. Procédé selon la revendication 1, **caractérisé en ce que** ledit rapport de proportionnalité inverse est le suivant :

$$ML = B/f\text{s}$$

où ML est ladite durée maximale, B est une constante prédéterminée, $f$s est la fréquence de synchronisation établie pour le moteur (M) par le microcontrôleur (MC), et dans lequel

$$MI_{max} \leq ML \leq MI_{min}$$

où $MI_{max}$ et $MI_{min}$ sont, respectivement, une valeur limite maximale prédéterminée et une valeur limite minimale prédéterminée de ladite durée maximale (ML).

3. Procédé selon la revendication 1, **caractérisé en ce que** ledit rapport de proportionnalité inverse est le suivant :

$$ML = C/Vmc$$

où ML est ladite durée maximale, C est une constante prédéterminée, Vmc est le taux de consommation de fil de trame, et dans lequel

$$MI_{max} \leq ML \leq MI_{min}$$

où $MI_{max}$ et $MI_{min}$ sont, respectivement, une valeur limite maximale prédéterminée et une valeur limite minimale prédéterminée de ladite durée maximale (ML).

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4623826 A
- EP 0401699 A
- IT 1307713